# EUROPEAN PATENT APPLICATION

(11) **EP 3 079 339 A1**
(43) Date of publication of application: **12.10.2016**
(21) Application number: 14886514.0
(22) Date of filing: 04.11.2014
(51) Int. Cl.: H04L 29/08

(54) **METHOD, DEVICE, AND ESB SYSTEM FOR DATA PROCESSING**

(30) Priority: 18.03.2014 CN 201410101706
(71) Applicant: Huawei Technologies Co., Ltd, Shenzhen, Guangdong 518129 (CN)
(72) Inventor: ZONG, Zhifeng, Shenzhen Guangdong 518129 (CN); ZHANG, Puchao, Shenzhen Guangdong 518129 (CN); HUANG, Haijun, Shenzhen Guangdong 518129 (CN)
(74) Representative: Maiwald Patentanwalts GmbH
(86) International application number: PCT/CN2014/090231
(87) International publication number: WO 2015/139461

(57) **Abstract**

The present invention relates to the field of computers, provides a data processing method, a device, and an ESB system, so that information is transferred in an ESB system more flexibly. The method includes: receiving service information, sent by a console, of a to-be-deployed first service, where the service information includes a definition of the first service and a service identifier of the first service; generating a first service instance according to the definition of the first service, where the first service instance is a service instance, deployed on a first deployment node, in service instances of the first service; and sending first address information to service instances in an enterprise service bus ESB system except the first service instance by using the first service instance, so that a second deployment node invokes the first service instance according to the first address information by using a second service instance. The data processing method, the device, and the ESB system provided in the present invention are applied to a service management platform.

## Description

### TECHNICAL FIELD

The present invention relates to the field of computers, and in particular, to a data processing method, a device, and an ESB system.

### BACKGROUND

For a large-scale distributed enterprise application, a relatively simple and practical middleware technology is required to simplify and unify an enterprise-level information system platform that is increasingly complex and cumbersome. An SOA (Service-Oriented Architecture, service-oriented architecture) can link different functional units of an application program by defining a good interface and contract between services. A key to supporting the SOA is an ESB (Enterprise Service Bus, enterprise service bus) for message transfer of the SOA. An ESB system is a product of a combination of technologies such as a conventional middleware technology, an XML (extensible Markup Language, Extensible Markup Language), and a Web service. The ESB delivers, to a consumer, a service of an application provided by a provider. In this process, the ESB can eliminate a technical difference between different applications, and allow different application servers to operate in a coordinated manner, so that communication and integration between services are implemented.

In the prior art, the ESB system includes a console, a deployment node, and a service registry. A service identifier of a service and an address of a deployment node for deploying a service instance are stored in the service registry. When a first service instance invokes a second service instance, a deployment node for deploying the first service instance can invoke the second service instance only by first querying the service registry to obtain an address of the second service instance. If a problem occurs at the service registry, the service registry cannot provide the service identifier and the address of the deployment node, resulting in that a problem also occurs in invocation between the service instances.

### SUMMARY

Embodiments of the present invention provide a data processing method, a device, and an ESB system, so that information is transferred in an ESB system more flexibly.

To achieve the foregoing objective, the following technical solutions are used in the embodiments of the present invention:
According to a first aspect, a first deployment node is provided, including:
   a receiving unit, configured to receive service information, sent by a console, of a to-be-deployed first service, where the service information includes a definition of the first service and a service identifier of the first service;
   a generation unit, configured to generate a first service instance according to the definition of the first service, where the first service instance is a service instance, deployed on the first deployment node, in service instances of the first service; and
   a sending unit, configured to send first address information to service instances in an enterprise service bus ESB system except the first service instance by using the first service instance, where the first address information includes the service identifier of the first service and an address of the first deployment node, so that a second deployment node invokes the first service instance according to the first address information by using a second service instance, where the second service instance is a service instance, deployed on the second deployment node, in service instances of a second service, and the second deployment node is any deployment node in the ESB system.

With reference to the first aspect, in a first implementable manner, the first deployment node further includes a running unit, where
the receiving unit is further configured to receive an invocation request that is sent by the second deployment node by using the second service instance, where the invocation request is generated according to an invocation instruction sent by the consumer server, the invocation instruction instructs the second service instance to invoke the first service instance, and includes the service identifier of the first service, a service identifier of the second service, and preset information, the preset information is sent by the consumer server, the invocation request includes the preset information, and the consumer server is a server that is using the second service instance;
the running unit is configured to run the first service instance according to the preset information, to obtain a successful invocation response; and
the sending unit is further configured to send the successful invocation response to the second deployment node by using the first service instance, so that the second deployment node receives the successful invocation response by using the second service instance.

With reference to the first aspect, in a second implementable manner, the first deployment node further includes a deletion unit, where
the receiving unit is further configured to receive an instance deletion instruction sent by the console, where the instance deletion instruction instructs the first deployment node to delete the first service instance;
the deletion unit is configured to delete the first service instance according to the instance deletion instruction; and
the sending unit is further configured to send an address deletion instruction to the service instances in the ESB system, where the address deletion instruction is used to instruct the service instances in the ESB system to delete the first address information, so that all deployment nodes in the ESB system delete the first address information according to the address deletion instruction.

According to a second aspect, a console is provided, including:
a generation unit, configured to generate service information of a to-be-deployed first service, where the service information includes a definition of the first service and a service identifier of the first service; and
a sending unit, configured to send the service information to a first deployment node, so that after generating a first service instance according to the definition of the first service, the first deployment node sends first address information to service instances in an ESB system except the first service instance by using the first service instance, where the first service instance is a service instance, deployed on the first deployment node, in service instances of the first service, and the first address information includes the service identifier of the first service and an address of the first deployment node.

With reference to the second aspect, in a first implementable manner, the console further includes:
a determining unit, configured to determine a deployment node of a to-be-deleted service, where
the generation unit is further configured to generate a service deletion instruction, where the service deletion instruction is used to instruct the deployment node of the to-be-deleted service to delete a service instance of the first service; and
the sending unit is further configured to: if the deployment node of the to-be-deleted service includes the first deployment node, send the service deletion instruction to the first deployment node, so that the first deployment node deletes the first service instance according to the service deletion instruction.

According to a third aspect, a data processing method is provided, where the method is applied to a first deployment node and includes:
receiving service information, sent by a console, of a to-be-deployed first service, where the service information includes a definition of the first service and a service identifier of the first service;
generating a first service instance according to the definition of the first service, where the first service instance is a service instance, deployed on the first deployment node, in service instances of the first service; and
sending first address information to service instances in an enterprise service bus ESB system except the first service instance by using the first service instance, where the first address information includes the service identifier of the first service and an address of the first deployment node, so that a second deployment node invokes the first service instance according to the first address information by using a second service instance, where the second service instance is a service instance, deployed on the second deployment node, in service instances of a second service, and the second deployment node is any deployment node in the ESB system.

With reference to the third aspect, in a first implementable manner, after the sending first address information to service instances in an enterprise service bus ESB system except the first service instance by using the first service instance, the method further includes:
receiving an invocation request that is sent by the second deployment node by using the second service instance, where the invocation request is generated according to an invocation instruction sent by the consumer server, the invocation instruction instructs the second service instance to invoke the first service instance, and includes the service identifier of the first service, a service identifier of the second service, and preset information, the preset information is sent by the consumer server, the invocation request includes the preset information, and the consumer server is a server that is using the second service instance;
running the first service instance according to the preset information, to obtain a successful invocation response; and
sending the successful invocation response to the second deployment node by using the first service instance, so that the second deployment node receives the successful invocation response by using the second service instance.

With reference to the third aspect, in a second implementable manner, after the sending first address information to service instances in an enterprise service bus ESB system except the first service instance by using the first service instance, the processing method further includes:
receiving an instance deletion instruction sent by the console, where the instance deletion instruction instructs the first deployment node to delete the first service instance;
deleting the first service instance according to the instance deletion instruction; and
sending an address deletion instruction to the service instances in the ESB system, where the address deletion instruction is used to instruct the service instances in the ESB system to delete the first address information, so that all deployment nodes in the ESB system delete the first address information according to the address deletion instruction.

According to a fourth aspect, a data processing method is provided, where the method is applied to a console and includes:
generating service information of a to-be-deployed first service, where the service information includes a definition of the first service and a service identifier of the first service; and
sending the service information to a first deployment node, so that after generating a first service instance according to the definition of the first service, the first deployment node sends first address information to service instances in an ESB system except the first service instance by using the first service instance, where the first service instance is a service instance, deployed on the first deployment node, in service instances of the first service, and the first address information includes the service identifier of the first service and an address of the first deployment node.

With reference to the fourth aspect, in a first implementable manner, after the sending the service information to a first deployment node, the data processing method further includes:
when a preset deletion condition is met, determining a deployment node of a to-be-deleted service;
generating a service deletion instruction, where the service deletion instruction is used to instruct the deployment node of the to-be-deleted service to delete a service instance of the first service; and
if the deployment node of the to-be-deleted service includes the first deployment node, sending the service deletion instruction to the first deployment node, so that the first deployment node deletes the first service instance according to the service deletion instruction. According to a fifth aspect, an ESB system is provided, including:
any one of the foregoing first deployment nodes; and
any one of the foregoing consoles.

The present invention provides a data processing method, a device, and an ESB system, where the method includes: receiving service information, sent by a console, of a to-be-deployed first service, where the service information includes a definition of the first service and a service identifier of the first service; generating a first service instance according to the definition of the first service, where the first service instance is a service instance, deployed on a first deployment node, in service instances of the first service; and sending first address information to service instances in an enterprise service bus ESB system except the first service instance by using the first service instance, where the first address information includes the service identifier of the first service and an address of the first deployment node, so that a second deployment node invokes the first service instance according to the first address information by using a second service instance, where the second service instance is a service instance, deployed on the second deployment node, in service instances of a second service, and the second deployment node is any deployment node in the ESB system. In this way, compared with the prior art, the first deployment node saves address information on each service instance instead of saving the address information in a service registry, and after the console sends the service information of the first service, the first deployment node generates the service instance according to the definition of the service, and notifies another service instance that the service instance of the first service is deployed on the first deployment node, so that invocation may be directly performed between service instances of different services; therefore, information is transferred in the ESB system more flexibly.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a first deployment node according to an embodiment of the present invention;
FIG. 2 is a schematic structural diagram of another first deployment node according to an embodiment of the present invention;
FIG. 3 is a schematic structural diagram of a console according to an embodiment of the present invention;
FIG. 4 is a schematic structural diagram of another console according to an embodiment of the present invention;
FIG. 5 is a schematic structural diagram of still another first deployment node according to an embodiment of the present invention;
FIG. 6 is a schematic structural diagram of still another console according to an embodiment of the present invention;
FIG. 7 is a flowchart of a data processing method according to an embodiment of the present invention;
FIG. 8 is a flowchart of another data processing method according to an embodiment of the present invention;
FIG. 9 is a flowchart of still another data processing method according to an embodiment of the present invention;
FIG. 10 is a schematic structural diagram of an ESB system according to an embodiment of the present invention;
FIG. 11 is a schematic structural diagram of a first deployment node according to another embodiment of the present invention; and
FIG. 12 is a schematic structural diagram of a console according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

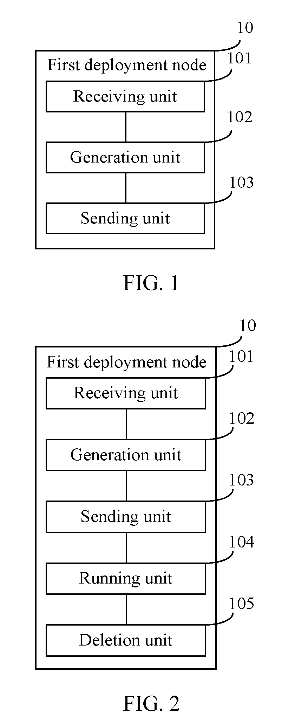

An embodiment of the present invention provides a first deployment node 10. As shown in FIG. 1, the first deployment node 10 includes:
a receiving unit 101, configured to receive service information, sent by a console, of a to-be-deployed first service, where the service information includes a definition of the first service and a service identifier of the first service, where
a first definition of the first service includes all files for installing the first service, such as an installation package and an upgrade package of a first service instance;
a generation unit 102, configured to generate a first service instance according to the definition of the first service, where the first service instance is a service instance, deployed on the first deployment node, in service instances of the first service; and
a sending unit 103, configured to send first address information to service instances in an enterprise service bus ESB system except the first service instance by using the first service instance, where the first address information includes the service identifier of the first service and an address of the first deployment node, so that a second deployment node invokes the first service instance according to the first address information by using a second service instance, where the second service instance is a service instance, deployed on the second deployment node, in service instances of a second service, and the second deployment node is any deployment node in the ESB system.

In this way, compared with the prior art, the first deployment node saves address information on each service instance instead of saving the address information in a service registry, and after the console sends the service information of the first service, the first deployment node generates the service instance according to the definition of the service, and notifies another service instance that the service instance of the first service is deployed on the first deployment node, so that invocation may be directly performed between service instances of different services; therefore, information is transferred in the ESB system more flexibly.

Further, as shown in FIG. 2, the first deployment node 10 further includes a running unit 104.

The receiving unit 101 is further configured to receive an invocation request that is sent by the second deployment node by using the second service instance, where the invocation request is generated according to an invocation instruction sent by the consumer server, the invocation instruction instructs the second service instance to invoke the first service instance, and includes the service identifier of the first service, a service identifier of the second service, and preset information, the preset information is sent by the consumer server, the invocation request includes the preset information, and the consumer server is a server that is using the second service instance.

The running unit 104 is configured to run the first service instance according to the preset information, to obtain a successful invocation response.

The sending unit 103 is further configured to send the successful invocation response to the second deployment node by using the first service instance, so that the second deployment node receives the successful invocation response by using the second service instance.

The first deployment node 10 further includes a deletion unit 105.

The receiving unit 101 is further configured to receive an instance deletion instruction sent by the console, where the instance deletion instruction instructs the first deployment node to delete the first service instance.

The deletion unit 105 is configured to delete the first service instance according to the instance deletion instruction.

The sending unit 103 is further configured to send an address deletion instruction to the service instances in the ESB system, where the address deletion instruction is used to instruct the service instances in the ESB system to delete the first address information, so that all deployment nodes in the ESB system delete the first address information according to the address deletion instruction.

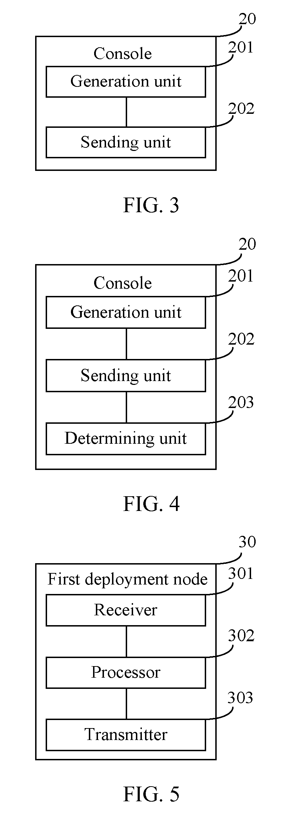

An embodiment of the present invention provides a console 20. As shown in FIG. 3, the console 20 includes:
a generation unit 201, configured to generate service information of a to-be-deployed first service, where the service information includes a definition of the first service and a service identifier of the first service, where
a first definition of the first service includes all files for installing the first service, such as an installation package and an upgrade package of a first service instance; and
a sending unit 202, configured to send the service information to a first deployment node, so that after generating a first service instance according to the definition of the first service, the first deployment node sends first address information to service instances in an ESB system except the first service instance by using the first service instance, where the first service instance is a service instance, deployed on the first deployment node, in service instances of the first service, and the first address information includes the service identifier of the first service and an address of the first deployment node.

In this way, compared with the prior art, the first deployment node saves address information on each service instance instead of saving the address information in a service registry, and after the console sends the service information of the first service, the first deployment node generates the service instance according to the definition of the service, and notifies another service instance that the service instance of the first service is deployed on the first deployment node, so that invocation may be directly performed between service instances of different services; therefore, information is transferred in the ESB system more flexibly.

Further, as shown in FIG. 4, the console 20 further includes:
a determining unit 203, configured to determine a deployment node of a to-be-deleted service.

The generation unit is further configured to generate a service deletion instruction, where the service deletion instruction is used to instruct the deployment node of the to-be-deleted service to delete the first service instance.

The sending unit 202 is further configured to: if the deployment node of the to-be-deleted service includes the first deployment node, send the service deletion instruction to the first deployment node, so that the first deployment node deletes the first service instance according to the service deletion instruction.

An embodiment of the present invention provides a first deployment node 30. As shown in FIG. 5, the first deployment node 30 includes:
a receiver 301, configured to receive service information, sent by a console, of a to-be-deployed first service, where the service information includes a definition of the first service and a service identifier of the first service;
a processor 302, configured to generate a first service instance according to the definition of the first service, where the first service instance is a service instance, deployed on the first deployment node, in service instances of the first service; and
a transmitter 303, configured to send first address information to service instances in an enterprise service bus ESB system except the first service instance by using the first service instance, where the first address information includes the service identifier of the first service and an address of the first deployment node, so that a second deployment node invokes the first service instance according to the first address information by using a second service instance, where the second service instance is a service instance, deployed on the second deployment node, in service instances of a second service, and the second deployment node is any deployment node in the ESB system.

In this way, compared with the prior art, the first deployment node saves address information on each service instance instead of saving the address information in a service registry, and after the console sends the service information of the first service, the first deployment node generates the service instance according to the definition of the service, and notifies another service instance that the service instance of the first service is deployed on the first deployment node, so that invocation may be directly performed between service instances of different services; therefore, information is transferred in the ESB system more flexibly.

Further, as shown in FIG. 5, the first deployment node 30 further includes:
the receiver 301 is further configured to receive an invocation request that is sent by the second deployment node by using the second service instance, where the invocation request is generated according to an invocation instruction sent by the consumer server, the invocation instruction instructs the second service instance to invoke the first service instance, and includes the service identifier of the first service, a service identifier of the second service, and preset information, the preset information is sent by the consumer server, the invocation request includes the preset information, and the consumer server is a server that is using the second service instance;
the processor 302 is further configured to run the first service instance according to the preset information, to obtain a successful invocation response; and
the transmitter 303 is further configured to send the successful invocation response to the second deployment node by using the first service instance, so that the second deployment node receives the successful invocation response by using the second service instance.

As shown in FIG. 5, the first deployment node 30 further includes:
the receiver 301 is further configured to receive an instance deletion instruction sent by the console, where the instance deletion instruction instructs the first deployment node to delete the first service instance;
the processor 302 is further configured to delete the first service instance according to the instance deletion instruction; and
the transmitter 303 is further configured to send an address deletion instruction to the service instances in the ESB system, where the address deletion instruction is used to instruct the service instances in the ESB system to delete the first address information, so that all deployment nodes in the ESB system delete the first address information according to the address deletion instruction.

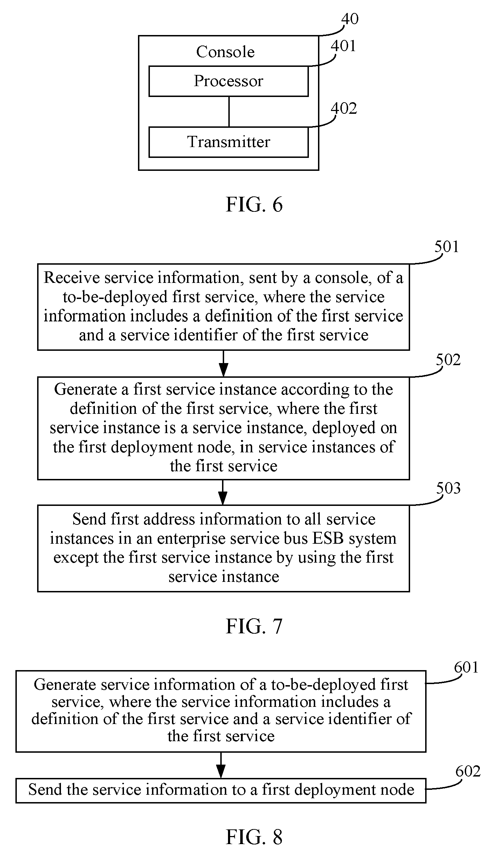

An embodiment of the present invention provides a console 40. As shown in FIG. 6, the console 40 includes:
a processor 401, configured to generate service information of a to-be-deployed first service, where the service information includes a definition of the first service and a service identifier of the first service; and
a transmitter 402, configured to send the service information to a first deployment node, so that after generating a first service instance according to the definition of the first service, the first deployment node sends first address information to service instances in an ESB system except the first service instance by using the first service instance, where the first service instance is a service instance, deployed on the first deployment node, in service instances of the first service, and the first address information includes the service identifier of the first service and an address of the first deployment node.

In this way, compared with the prior art, the first deployment node saves address information on each service instance instead of saving the address information in a service registry, and after the console sends the service information of the first service, the first deployment node generates the service instance according to the definition of the service, and notifies another service instance that the service instance of the first service is deployed on the first deployment node, so that invocation may be directly performed between service instances of different services; therefore, information is transferred in the ESB system more flexibly.

Further, as shown in FIG. 6, the console 40 further includes:
the processor 401 is further configured to determine a deployment node of a to-be-deleted service;
the generation unit is further configured to generate a service deletion instruction, where the service deletion instruction is used to instruct the deployment node of the to-be-deleted service to delete the first service instance; and
the transmitter 402 is further configured to: if the deployment node of the to-be-deleted service includes the first deployment node, send the service deletion instruction to the first deployment node, so that the first deployment node deletes the first service instance according to the service deletion instruction.

An embodiment of the present invention provides a data processing method, applied to a first deployment node. Specific steps are shown in FIG. 7 and include:
Step 501: Receive service information, sent by a console, of a to-be-deployed first service, where the service information includes a definition of the first service and a service identifier of the first service.

A first definition of the first service includes all files for installing the first service.

Step 502: Generate a first service instance according to the definition of the first service, where the first service instance is a service instance, deployed on the first deployment node, in service instances of the first service.

Step 503: Send first address information to service instances in an enterprise service bus ESB system except the first service instance by using the first service instance.

The first address information includes the service identifier of the first service and an address of the first deployment node. A second deployment node invokes the first service instance according to the first address information by using a second service instance, where the second service instance is a service instance, deployed on the second deployment node, in service instances of a second service, and the second deployment node is any deployment node in the ESB system. It should be noted that, the second service instance may be a service instance deployed on the first deployment node other than the first service instance.

In this way, compared with the prior art, the first deployment node saves address information on each service instance instead of saving the address information in a service registry, and after the console sends the service information of the first service, the first deployment node generates the service instance according to the definition of the service, and notifies another service instance that the service instance of the first service is deployed on the first deployment node, so that invocation may be directly performed between service instances of different services; therefore, information is transferred in the ESB system more flexibly.

Further, after step 503 of sending first address information to service instances in an enterprise service bus ESB system except the first service instance by using the first service instance, the method further includes:
The first deployment node may receive an invocation request that is sent by the second deployment node by using the second service instance, where the invocation request is generated according to an invocation instruction sent by the consumer server, the invocation instruction instructs the second service instance to invoke the first service instance, and includes the service identifier of the first service, a service identifier of the second service, and preset information,
the preset information is sent by the consumer server, the invocation request includes the preset information, and the consumer server is a server that is using the second service instance; run the first service instance according to the preset information, to obtain a successful invocation response; and send the successful invocation response to the second deployment node by using the first service instance, so that the second deployment node receives the successful invocation response by using the second service instance.

Further, after step 503 of sending first address information to service instances in an enterprise service bus ESB system except the first service instance by using the first service instance, the processing method further includes:
The first deployment node may receive an instance deletion instruction sent by the console, where the instance deletion instruction instructs the first deployment node to delete the first service instance; delete the first service instance according to the instance deletion instruction;
and send an address deletion instruction to the service instances in the ESB system, where the address deletion instruction is used to instruct the service instances in the ESB system to delete the first address information, so that all deployment nodes in the ESB system delete the first address information according to the address deletion instruction.

An embodiment of the present invention provides a data processing method, applied to a console. Specific steps are shown in FIG. 8 and include:
Step 601: Generate service information of a to-be-deployed first service, where the service information includes a definition of the first service and a service identifier of the first service.
Step 602: Send the service information to a first deployment node.

In this way, compared with the prior art, the first deployment node saves address information on each service instance instead of saving the address information in a service registry, and after the console sends the service information of the first service, the first deployment node generates the service instance according to the definition of the service, and notifies another service instance that the service instance of the first service is deployed on the first deployment node, so that invocation may be directly performed between service instances of different services; therefore, information is transferred in the ESB system more flexibly.

After step 602 of sending the service information to a first deployment node, the data processing method further includes:
When a preset deletion condition is met, the console determines a deployment node of a to-be-deleted service; generates a service deletion instruction, where the service deletion instruction is used to instruct the deployment node of the to-be-deleted service to delete a service instance of the first service; and if the deployment node of the to-be-deleted service includes the first deployment node, sends the service deletion instruction to the first deployment node, so that the first deployment node deletes a first service instance according to the service deletion instruction, where the preset deletion condition includes many types, which may be classified into artificial deletion and automatic deletion. The artificial deletion is that an administrator on a console side artificially triggers the console to generate a service deletion instruction; and the automatic deletion is that the console monitors a situation in which a consumer uses a service instance, and if a quantity of consumer servers that use the service instance is reduced, the console generates a deletion instruction, and sends the deletion instruction to a corresponding quantity of deployment nodes.

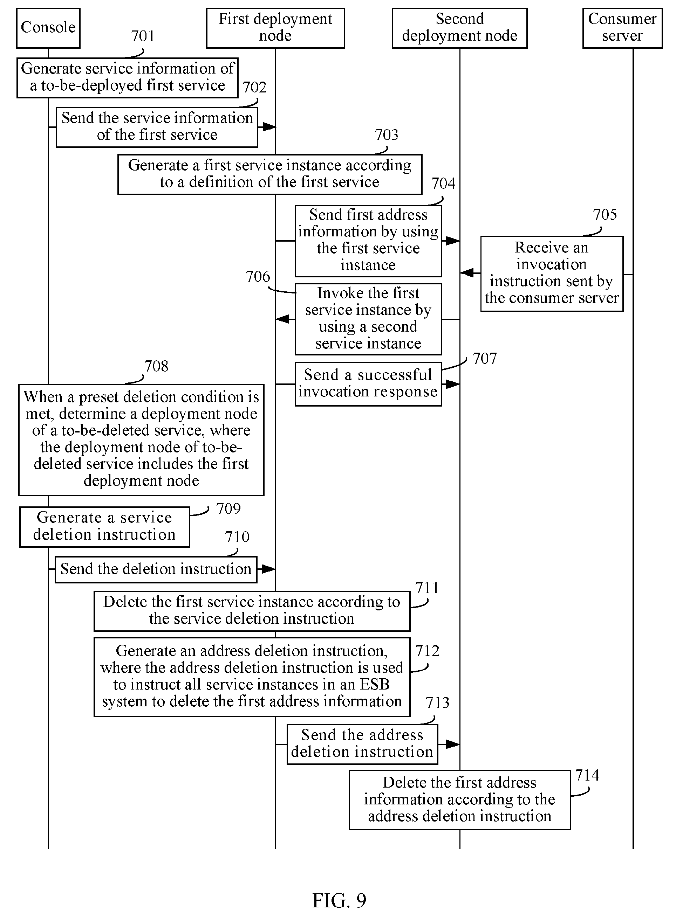

An embodiment of the present invention provides a data processing method. Specific steps are shown in FIG. 9 and include:
Step 701: A console generates service information of a to-be-deployed first service.

A service provided by a provider server is pre-stored on the console, and the console starts the first service according to an artificial operation of an administrator. Specifically, the administrator may set deployment nodes corresponding to the to-be-deployed first service, and trigger the console to generate the service information of the first service, where the service information of the first service includes a definition of the first service and a service identifier of the first service. The definition of the first service is all files for installing the first service, such as an installation package and an upgrade package of the first service.

Step 702: The console sends the service information of the first service to a first deployment node.

The first deployment node is a deployment node corresponding to the first service, and the console sends the service information only to each deployment node corresponding to the first service.

Step 703: The first deployment node generates a first service instance according to a definition of the first service.

It should be noted that the first service instance is a service instance, deployed on the first deployment node, in service instances of the first service.

Step 704: The first deployment node sends first address information to service instances in an ESB system except the first service instance by using the first service instance.

The first deployment node may send the first address information to the service instances deployed on the first deployment node except the first service instance by using the first service instance, where the first address information includes the service identifier of the first service and an address of the first deployment node, and the address of the first deployment node is also an address of the first service instance, so that the first deployment node saves address information of the first service by using a service registry of each service instance deployed on the first deployment node; or may send the first address information to a service instance deployed on another deployment node other than the first deployment node, where the first address information includes the service identifier of the first service and an address of the first deployment node, so that a second deployment node saves address information of the first service by using a service registry of each service instance deployed on the second deployment node.

Step 705: A second deployment node receives an invocation instruction sent by a consumer server.

The invocation instruction includes the service identifier of the first service, a service identifier of a second service, and preset information, and the invocation instruction is used to instruct a second service instance to invoke the first service instance. The preset information is information input by the consumer server, where the consumer server is a server that is using the second service instance. Exemplarily, it is assumed that the invocation instruction is generated when a user purchases nuts on an application of a shopping website by using the consumer server, the client provides a shopping service instance, the user confirms payment after checking information about a weight, postage, and total costs of the purchased nuts, and a deployment node for deploying the shopping service instance invokes a payment service instance of a payment application, where the invocation instruction includes the information about the total costs, a service identifier of a shopping service, and a service identifier of the payment service instance.

Step 706: The second deployment node invokes the first service instance by using a second service instance.

The second service instance is a service instance, deployed on the second deployment node, in service instances of a second service. The second deployment node may be a deployment node different from the first deployment node, or may be the first deployment node. The second service is a service different from the first service. In this embodiment, an example in which the second deployment node and the first deployment node are different deployment nodes is used. The second deployment node obtains multiple addresses of the service instances of the first service by querying a service registry of the second service instance, and then determines a to-be-invoked service instance from the service instances of the first service according to a preset rule. It is assumed that the to-be-invoked service instance is the first service instance, and the second deployment node acquires the address of the first service instance, that is, the address of the first deployment node by using the second service instance, and sends the invocation instruction to the first deployment node by using the address of the first deployment node. The first deployment node generates an invocation request according to the invocation instruction by using the first service instance, where the invocation request includes the preset information, and runs the first service instance according to the preset information.

Exemplarily, it is assumed that an operator client carries out a time-limited call fee recharge activity, in which 3 yuan is saved if 50 yuan is recharged and 10 yuan is saved if 100 yuan is recharged from 10:00 to 12:00 on January 12, 2014. Zhang San uses a call fee recharge service instance of the operator client at 11:23 by using a mobile phone, and inputs, by using the mobile phone, a mobile phone number that needs call fee recharge and an amount. It is assumed that the amount is 100 yuan. Zhang San confirms payment after checking the mobile phone number and the amount, and the call fee recharge service instance automatically changes the amount of call fee recharge to 90 yuan. A deployment node for deploying the call fee recharge service instance sends an invocation instruction to an Internet bank payment service instance, where the invocation instruction includes the amount and the mobile phone number for call fee recharge, a service identifier of the Internet bank payment service instance, and a service identifier of the call fee recharge service instance. The Internet bank payment service instance generates an invocation request according to the invocation instruction, where the invocation request includes the amount and the mobile phone number for call fee recharge. The Internet bank payment service instance runs according to the amount and the mobile phone number for call fee recharge, and a successful invocation response is generated after payment is completed, where the successful invocation response is used to instruct the call fee recharge service instance to recharge a 10 yuan call fee to the mobile phone of the mobile phone number, to complete an entire call fee recharge process.

Step 707: The first deployment node sends a successful invocation response to the second deployment node by using the first service instance.

Step 708: When a preset deletion condition is met, the console determines a deployment node of a to-be-deleted service, where the deployment node of the to-be-deleted service includes the first deployment node.

The preset deletion condition includes many situations, such as an artificial deletion situation and an automatic deletion situation. Exemplarily, the artificial deletion situation is that the administrator on a console side proactively trigger to stop one or more deployment nodes so as to delete a service instance. For example, when a service is being updated, the the administrator may save a definition of the service and send the definition to a deployment node corresponding to the service, where the definition of the service may be an update package of the service instance, delete some service instances of the service, generate a service instance of the service by using a definition of a service of a new version, then delete the other service instances of the service, and generate a service instance of the service by using a definition of a service of a new version. In this way, when service update is completed, a service instance of the service in the ESB system does not stop providing a service. Exemplarily, the automatic deletion situation may be deleting a service instance in a pre-determined time, or may be deleting a service instance by pre-determining an upper limit of consumer servers. For example, an operator client carries out a time-limited call fee recharge activity, in which 3 yuan is saved if 50 yuan is recharged and 10 yuan is saved if 100 yuan is recharged from 10:00 to 12:00 on January 12, 2014, and when a quantity of users that perform call fee recharge is less than the pre-determined upper limit of consumer servers, a service instance is deleted according to a quantity of people who recharge a call fee in a unit time.

Step 709: The console generates a service deletion instruction.

The service deletion instruction is used to instruct the deployment node for deploying the to-be-deleted service to delete a service instance of the first service.

Step 710: The console sends the deletion instruction to the first deployment node.

Step 711: The first deployment node deletes the first service instance according to the service deletion instruction.

Step 712: The first deployment node generates an address deletion instruction, where the address deletion instruction is used to instruct the service instances in the ESB system to delete the first address information.

Step 713: The first deployment node sends the address deletion instruction to the service instances in the ESB system.

The service instances in the ESB system include a service instance deployed on the second deployment node.

Step 714: The second deployment node deletes the first address information according to the address deletion instruction.

It should be noted that, the second deployment node deletes the first address information, that is, the first address information is deleted from a service registry of each service instance deployed on the second deployment node, and the second deployment node may be any one of all deployment nodes.

It should be noted that, the deployment node of the present invention not only can delete a service instance, but also can add a service instance to a new deployment node, and a specific method is the same as the method of steps 701 to 704. Because multiple service instances are deployed on one deployment node, and one service instance may be deployed on multiple deployment nodes, when the ESB system runs multiple service instances at the same time, to prevent a mutual effect between the service instances, the deployment node manages running resources of the service instances, to divide a resource for a service instance of each service. The present invention provides a data processing method, including: receiving service information, sent by a console, of a to-be-deployed first service; generating a first service instance according to a definition of the first service; and sending first address information to service instances in an enterprise service bus ESB system except the first service instance by using the first service instance, so that a second deployment node invokes the first service instance according to the first address information by using a second service instance. In this way, compared with the prior art, the first deployment node saves address information on each service instance instead of saving the address information in a service registry, and after the console sends the service information of the first service, the first deployment node generates the service instance according to the definition of the service, and notifies another service instance that the service instance of the first service is deployed on the first deployment node, so that invocation may be directly performed between service instances of different services; therefore, information is transferred in the ESB system more flexibly.

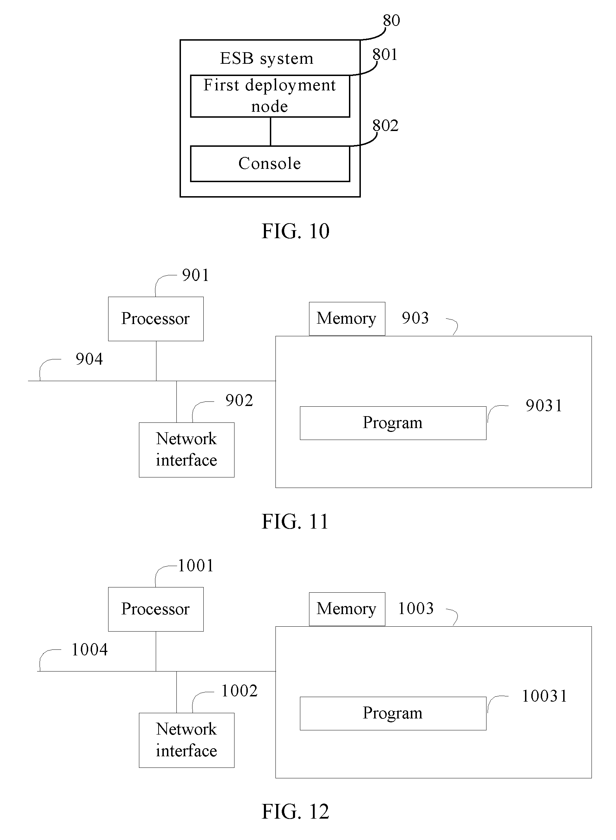

An embodiment of the present invention provides an ESB system 80. As shown in FIG. 10, the ESB system 80 includes a first deployment node 801 and a console 802. The first deployment node 801 is configured to receive service information, sent by the console, of a to-be-deployed first service, where the service information includes a definition of the first service and a service identifier of the first service; generate a first service instance according to the definition of the first service, where the first service instance is a service instance, deployed on the first deployment node, in service instances of the first service; and send first address information to service instances in an enterprise service bus ESB system except the first service instance by using the first service instance, where the first address information includes the service identifier of the first service and an address of the first deployment node, so that a second deployment node invokes the first service instance according to the first address information by using a second service instance, where the second service instance is a service instance, deployed on the second deployment node, in service instances of a second service, and the second deployment node is any deployment node in the ESB system. The console 802 is configured to generate the service information of the to-be-deployed first service, where the service information includes the definition of the first service and the service identifier of the first service; and send the service information to the first deployment node, so that after generating the first service instance according to the definition of the first service, the first deployment node sends the first address information to the service instances in the ESB system except the first service instance by using the first service instance, where the first service instance is a service instance, deployed on the first deployment node, in the service instances of the first service, and the first address information includes the service identifier of the first service and the address of the first deployment node.

FIG. 11 describes a structure of a first deployment node according to another embodiment of the present invention. The first deployment node includes at least one processor 901 (for example, a CPU), at least one network interface 902 or another communications interface, a memory 903, and at least one communications bus 904 that is configured to implement connection and communication between these apparatuses. The processor 901 is configured to execute an executable module stored in the memory 903, for example, a computer program. The memory 903 may include a high-speed random access memory (RAM: Random Access Memory), and may further include a non-volatile memory (non-volatile memory), for example, at least one magnetic disk storage. A communication connection between a system gateway of a browser and at least one other network element may be implemented through the Internet, a wide area network, a local area network, a metropolitan area network, or the like by using the at least one network interface 902 (which may be wired or wireless).

In some implementation manners, the memory 903 stores a program 9031, where the program 9031 may be executed by the processor 901, and the program 9031 includes:
receiving service information, sent by a console, of a to-be-deployed first service, where the service information includes a definition of the first service and a service identifier of the first service;
generating a first service instance according to the definition of the first service, where the first service instance is a service instance, deployed on the first deployment node, in service instances of the first service;
sending first address information to service instances in an enterprise service bus ESB system except the first service instance by using the first service instance, where the first address information includes the service identifier of the first service and an address of the first deployment node, so that a second deployment node invokes the first service instance according to the first address information by using a second service instance, where the second service instance is a service instance, deployed on the second deployment node, in service instances of a second service, and the second deployment node is any deployment node in the ESB system;
receiving an invocation request that is sent by the second deployment node by using the second service instance, where the invocation request is generated according to an invocation instruction sent by a consumer server, the invocation instruction instructs the second service instance to invoke the first service instance, and includes the service identifier of the first service, a service identifier of the second service, and preset information, the preset information is sent by the consumer server, the invocation request includes the preset information, and the consumer server is a server that is using the second service instance;
running the first service instance according to the preset information, to obtain a successful invocation response;
sending the successful invocation response to the second deployment node by using the first service instance, so that the second deployment node receives the successful invocation response by using the second service instance;
receiving an instance deletion instruction sent by the console, where the instance deletion instruction instructs the first deployment node to delete the first service instance;
deleting the first service instance according to the instance deletion instruction; and
sending an address deletion instruction to the service instances in the ESB system, where the address deletion instruction is used to instruct the service instances in the ESB system to delete the first address information, so that all deployment nodes in the ESB system delete the first address information according to the address deletion instruction.

FIG. 12 describes a structure of a console according to another embodiment of the present invention. The console includes at least one processor 1001 (for example, a CPU), at least one network interface 1002 or another communications interface, a memory 1003, and at least one communications bus 1004 that is configured to implement connection and communication between these apparatuses. The processor 1001 is configured to execute an executable module stored in the memory 1003, such as a computer program. The memory 1003 may include a high-speed random access memory (RAM: Random Access Memory), and may further include a non-volatile memory (non-volatile memory), for example, at least one magnetic disk storage. A communication connection between a system gateway of a browser and at least one other network element may be implemented through the Internet, a wide area network, a local area network, a metropolitan area network, or the like by using the at least one network interface 1002 (which may be wired or wireless).

In some implementation manners, the memory 1003 stores a program 10031, where the program 10031 may be executed by the processor 1001, and the program 10031 includes:
generating service information of a to-be-deployed first service, where the service information includes a definition of the first service and a service identifier of the first service;
sending the service information to a first deployment node, so that after generating a first service instance according to the definition of the first service, the first deployment node sends first address information to service instances in an ESB system except the first service instance by using the first service instance, where the first service instance is a service instance, deployed on the first deployment node, in service instances of the first service, and the first address information includes the service identifier of the first service and an address of the first deployment node;
when a preset deletion condition is met, determining a deployment node of a to-be-deleted service;
generating a service deletion instruction, where the service deletion instruction is used to instruct the deployment node of the to-be-deleted service to delete a service instance of the first service; and
if the deployment node of the to-be-deleted service includes the first deployment node, sending the service deletion instruction to the first deployment node, so that the first deployment node deletes the first service instance according to the service deletion instruction.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

It should be noted that a sequence of the steps of the data processing method provided in the embodiments of the present invention may be adjusted properly, and a step may also be added or removed according to conditions. Modified methods readily figured out by any person skilled in the art without departing from the technical scope disclosed in the present invention shall fall within the protection scope of the present invention, and therefore, details are not described again.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A first deployment node, comprising:
a receiving unit, configured to receive service information, sent by a console, of a to-be-deployed first service, wherein the service information comprises a definition of the first service and a service identifier of the first service;
a generation unit, configured to generate a first service instance according to the definition of the first service, wherein the first service instance is a service instance, deployed on the first deployment node, in service instances of the first service; and
a sending unit, configured to send first address information to service instances in an enterprise service bus ESB system except the first service instance by using the first service instance, wherein the first address information comprises the service identifier of the first service and an address of the first deployment node, so that a second deployment node invokes the first service instance according to the first address information by using a second service instance, wherein the second service instance is a service instance, deployed on the second deployment node, in service instances of a second service, and the second deployment node is any deployment node in the ESB system.

2. The first deployment node according to claim 1, wherein the first deployment node further comprises a running unit, wherein
the receiving unit is further configured to receive an invocation request that is sent by the second deployment node by using the second service instance, wherein the invocation request is generated according to an invocation instruction sent by the consumer server, the invocation instruction instructs the second service instance to invoke the first service instance, and comprises the service identifier of the first service, a service identifier of the second service, and preset information, the preset information is sent by the consumer server, the invocation request comprises the preset information, and the consumer server is a server that is using the second service instance;
the running unit is configured to run the first service instance according to the preset information, to obtain a successful invocation response; and
the sending unit is further configured to send the successful invocation response to the second deployment node by using the first service instance, so that the second deployment node receives the successful invocation response by using the second service instance.

3. The first deployment node according to claim 1, wherein the first deployment node further comprises a deletion unit, wherein
the receiving unit is further configured to receive an instance deletion instruction sent by the console, wherein the instance deletion instruction instructs the first deployment node to delete the first service instance;
the deletion unit is configured to delete the first service instance according to the instance deletion instruction; and
the sending unit is further configured to send an address deletion instruction to the service instances in the ESB system, wherein the address deletion instruction is used to instruct the service instances in the ESB system to delete the first address information, so that all deployment nodes in the ESB system delete the first address information according to the address deletion instruction.

4. A console, comprising:
a generation unit, configured to generate service information of a to-be-deployed first service, wherein the service information comprises a definition of the first service and a service identifier of the first service; and
a sending unit, configured to send the service information to a first deployment node, so that after generating a first service instance according to the definition of the first service, the first deployment node sends first address information to service instances in an ESB system except the first service instance by using the first service instance, wherein the first service instance is a service instance, deployed on the first deployment node, in service instances of the first service, and the first address information comprises the service identifier of the first service and an address of the first deployment node.

5. The console according to claim 4, wherein the console further comprises:
a determining unit, configured to determine a deployment node of a to-be-stopped service,
wherein
the generation unit is further configured to generate a service deletion instruction, wherein the service deletion instruction is used to instruct the deployment node of the to-be-stopped service to delete the first service instance; and
the sending unit is further configured to: if the deployment node of the to-be-stopped service comprises the first deployment node, send the service deletion instruction to the first deployment node, so that the first deployment node deletes the first service instance according to the service deletion instruction.

6. A data processing method, wherein the method is applied to a first deployment node and comprises:
receiving service information, sent by a console, of a to-be-deployed first service, wherein the service information comprises a definition of the first service and a service identifier of the first service;
generating a first service instance according to the definition of the first service, wherein the first service instance is a service instance, deployed on the first deployment node, in service instances of the first service; and
sending first address information to service instances in an enterprise service bus ESB system except the first service instance by using the first service instance, wherein the first address information comprises the service identifier of the first service and an address of the first deployment node, so that a second deployment node invokes the first service instance according to the first address information by using a second service instance, wherein the second service instance is a service instance, deployed on the second deployment node, in service instances of a second service, and the second deployment node is any deployment node in the ESB system.

7. The data processing method according to claim 6, wherein after the sending first address information to service instances in an enterprise service bus ESB system except the first service instance by using the first service instance, the method further comprises:
receiving an invocation request that is sent by the second deployment node by using the second service instance, wherein the invocation request is generated according to an invocation instruction sent by the consumer server, the invocation instruction instructs the second service instance to invoke the first service instance, and comprises the service identifier of the first service, a service identifier of the second service, and preset information, the preset information is sent by the consumer server, the invocation request comprises the preset information, and the consumer server is a server that is using the second service instance;
running the first service instance according to the preset information, to obtain a successful invocation response; and
sending the successful invocation response to the second deployment node by using the first service instance, so that the second deployment node receives the successful invocation response by using the second service instance.

8. The data processing method according to claim 6, wherein after the sending first address information to service instances in an enterprise service bus ESB system except the first service instance by using the first service instance, the processing method further comprises:
receiving an instance deletion instruction sent by the console, wherein the instance deletion instruction instructs the first deployment node to delete the first service instance;
deleting the first service instance according to the instance deletion instruction; and
sending an address deletion instruction to the service instances in the ESB system, wherein the address deletion instruction is used to instruct the service instances in the ESB system to delete the first address information, so that all deployment nodes in the ESB system delete the first address information according to the address deletion instruction.

9. A data processing method, wherein the method is applied to a console and comprises:
generating service information of a to-be-deployed first service, wherein the service information comprises a definition of the first service and a service identifier of the first service; and
sending the service information to a first deployment node, so that after generating a first service instance according to the definition of the first service, the first deployment node sends first address information to service instances in an ESB system except the first service instance by using the first service instance, wherein the first service instance is a service instance, deployed on the first deployment node, in service instances of the first service, and the first address information comprises the service identifier of the first service and an address of the first deployment node.

10. The data processing method according to claim 9, wherein after the sending the service information to a first deployment node, the data processing method further comprises:
when a preset deletion condition is met, determining a deployment node of a to-be-deleted service;
generating a service deletion instruction, wherein the service deletion instruction is used to instruct the deployment node of the to-be-deleted service to delete a service instance of the first service; and
if the deployment node of the to-be-deleted service comprises the first deployment node, sending the service deletion instruction to the first deployment node, so that the first deployment node deletes the first service instance according to the service deletion instruction.

11. An ESB system, comprising:
the first deployment node according to any one of claims 1 to 3; and
the console according to claim 4 or 5.
